Europäisches Patentamt

European Patent Office

Office européen des brevets

(11) Veröffentlichungsnummer: **0 342 355 B1**

## (12) EUROPÄISCHE PATENTSCHRIFT

(45) Veröffentlichungstag der Patentschrift:
17.07.91 Patentblatt 91/29

(51) Int. Cl.⁵: **B60J 1/20,** B61D 25/00,
E06B 9/171

(21) Anmeldenummer: 89106385.1

(22) Anmeldetag: 11.04.89

(54) **Fensterrollo.**

(30) Priorität: 20.04.88 DE 3813153

(43) Veröffentlichungstag der Anmeldung:
23.11.89 Patentblatt 89/47

(45) Bekanntmachung des Hinweises auf die
Patenterteilung:
17.07.91 Patentblatt 91/29

(84) Benannte Vertragsstaaten:
DE ES FR GB IT SE

(56) Entgegenhaltungen:
DE-A- 3 428 700
DE-C- 506 001
US-A- 2 041 757

(73) Patentinhaber: Gebr. Happich GmbH
Postfach 10 02 49 Clausenbrücke 1
W-5600 Wuppertal 1 (DE)

(72) Erfinder: Klose, Odo, Prof.
Am Freudenberg 19
W-5600 Wuppertal 1 (DE)

EP 0 342 355 B1

## Beschreibung

Die Erfindung bezieht sich auf ein Fensterrollo für Windschutzscheiben von Kraftfahrzeugen, mit zwei im Abstand voneinander an einen Fensterrahmen anordbaren Trägern für eine daran gelagerte Wickelwelle, an der die Rollobahn mit einer Kante befestigt ist.

Fensterrollos der angegebenen Art dienen vornehmlich als Sonnenschutz und sind in verschiedenen Ausführungsformen bekannt. Sie werden im allgemeinen mit zylindrischen Winkelwellen ausgerüstet und (vgl. z.B. die DE-A-32 06 140) in horizontaler Ausrichtung ihrer Wickelwelle an der oberen Rahmenleiste von Fenstern angeordnet. Auch die Anordnung eines Fensterrollos an der unteren Rahmenleiste eines Fahrzeugfensters ist bekannt (vgl. z.B. die DE-A-29 43 249).

Wenn solche Fensterrollos vor rechteckigen Fenstern angeordnet werden, bereitet es keine Mühe, eine ausreichende Abschirmung der Fenster mit der entsprechend rechteckigen Rollobahn zu erzielen. Dagegen sieht es völlig anders aus, wenn solche Rollos für die Abschirmung von Windschutzscheiben von Fahrzeugen eingesetzt werden sollen. Die Windschutzscheiben sind nämlich in der Regel nicht rechteckig sondern im allgemeinen trapezförmig ausgebildet, so daß sich hier, trotz Verwendung von zwei Fensterrollos pro Windschutzscheibe, relativ große unabgeschirmte Bereiche ergeben, die eine entsprechende Blendungsgefahr hervorrufen.

Der Erfindung liegt nun die Aufgabe zugrunde, ein Fensterrollo der eingangs genannten Art so zu gestalten, daß sich eine wesentlich verbesserte Abschirmung der Windschutzscheibe und damit ein verbesserter Schutz gegen Sonnenstrahlen und gegen von entgegenkommenden Fahrzeugen herrührenden Lichtquellen erzielen läßt.

Zur Lösung dieser Aufgabe ist erfindungsgemäß vorgesehen, daß die Wickelwelle derart axial verschieblich gelagert ist, daß während des Ab- und Aufwickelns des Fensterrollos zwischen dem schrägen Rand der Rollobahn und der entsprechend schräg verlaufenden A-Säule des PKW kein unabgeschirmter Spalt, der eine Blendung hervorrufen könnte, verbleibt.

Zufolge dieser erfindungsgemäßen Maßnahme kann nunmehr die Rollobahn in die Bereiche der Windschutzscheibe bewegt werden, in denen eine erhöhte Blendungsgefahr besteht.

Gemäß einer Ausführungsform der Erfindung kann die Wickelwelle so gelagert sein, daß durch die Drehbewegung beim Auf- und Abwickeln der Rollobahn, automatisch eine Axialverschiebung erfolgt. Dazu kann die Wickelwelle mit zumindest einem der Träger über ein Schraubengewinde axial verschieblich verbunden sein. Insbesondere kann die Wickelwelle an zumindest einem Endbereich ein Innengewinde aufweisen und hier von einer feststehenden Gewindespindel des Trägers aufgenommen sein.

Um das erfindungsgemäße Fensterrollo zu vervollkommnen, ist in bevorzugter Ausgestaltung der Erfindung vorgesehen, daß die Wickelwelle eine trapezförmige Rollobahn mit einseitiger Schräge trägt, die daran mit der kürzeren Kante befestigt ist. Die trapezförmige Rollobahn kann natürlich exakt der Windschutzscheibengestaltung (einseitig) angepaßt werden, so daß zwischen dem schrägen Rand der Rollobahn und der entsprechend schräg verlaufenden A-Säule des Fahrzeugs kein unabgeschirmter Spalt, der eine Blendung hervorrufen könnte, verbleibt. Es versteht sich, daß die Axialbewegung der Wickelwelle auf die jeweilige Schräge der Rollobahn so abzustimmen ist, daß die schräge Kante der Rollobahn stets parallel zur entsprechend schräg verlaufenden A-Säule des Fahrzeugs ausgerichtet ist.

In weiterer Ausgestaltung der Erfindung, kann die Wickelwelle eine Rollobahn tragen, an deren freien Kante eine Leiste befestigt ist. Diese, parallel zur Wickelwelle ausgerichtete Leiste überragt die Rollobahn einseitig und trägt am freien Endbereich ein mit einer parallel zur schrägen Kante der Rollobahn verlaufenden, am Fensterrahmen angeordneten Führung verbundenes Führungselement.

Schließlich kann vorgesehen sein, daß die Wickelwelle mit einem automatischen, ggf. elektromotorisch betriebenen Aufwickler ausgerüstet ist. Es ist aber auch möglich, eine Wickelwelle mit innenliegendem Federaufzug einzusetzen und das Abwickeln der Rollobahn über das Führungselement, das ggf. mit einer elektromechanischen Verschiebeautomatik, ausgerüstet ist, zu bewerkstelligen.

Ein Ausführungsbeispiel der Erfindung wird im folgenden anhand der Zeichnung näher erläutert. Es zeigen

Fig. 1     die Teilansicht eines Fahrzeuges mit zwei oberhalb der Windschutzscheibe angeordneten Fensterrollos mit aufgewickelten Rollobahnen,

Fig. 2     die Teilansicht nach Fig. 1 mit jeweils teilweise abgewickelten Rollobahnen,

Fig. 3     die Teilansicht nach Fig. 1 und 2 mit gänzlich abgewickelten Rollobahnen und

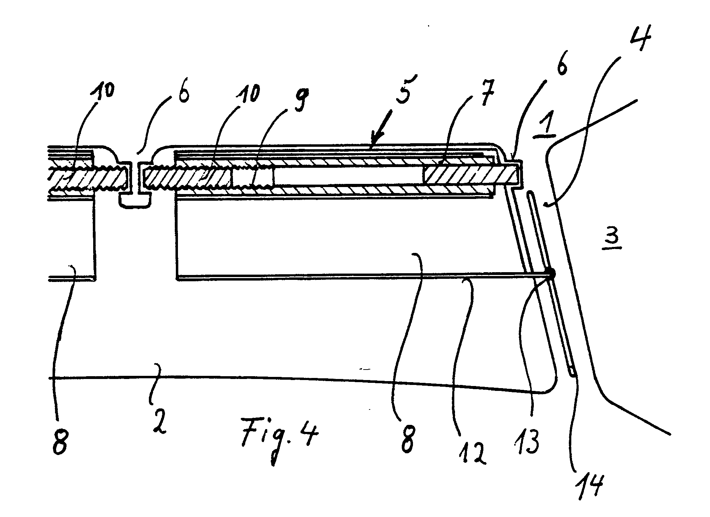

Fig. 4     eine Fig. 2 entsprechende Teilansicht mit im Längsschnitt dargestellten Wickelwellen.

Die Zeichnungen zeigen den Teilbereich eines Personenkraftfahrzeugs 1 mit einer Windschutzscheibe 2, einer Seitenscheibe 3, einer zwischen den Scheiben 2 und 3 befindlichen A-Säule 4 und mit zwei oberhalb der

2

Windschutzscheibe 2 am Fahrzeug 1 angeordneten Fensterrollos 5. Jedes Fensterrollo 5 weist zwei im Abstand voneinander angeordnete Lagerböcke oder Träger 6 mit einer daran gelagerten zylindrischen Wickelwelle 7, an der ein Rollobahn 8 mit einer Kante befestigt ist, auf. Die Wickelwellen 7 sind jeweils einendig mit einem Innengewinde 9 versehen und damit auf einer zum Träger 6 gehörenden Gewindespindel 10 angeordnet. Anderendig ist die Wickelwelle 7 auf einem Zapfen 11 gleitlagerartig angeordnet. Durch diese Lagerung der Wickelwelle 7 erfolgt bei einer Drehbewegung automatisch eine Axialverschiebung derselben, wobei sich der Verschiebeweg durch die jeweils gewählte Gewindesteigung bestimmen läßt.

Die Zeichnungen zeigen ferner, daß die Rollobahn 8 eine trapezförmige Gestaltung aufweist. Die kurze Kante der Rollobahn 8 ist an der Wickelwelle 7 in üblicher und daher hier nicht näher dargestellter Weise befestigt. Die untere, lange Kante der Rollobahn 8, die parallel zur oberen, kurzen Kante verläuft, ist an einer sich über deren Länge erstreckenden und noch in Richtung zur A-Säule 4 überragenden Leiste 12 befestigt. Die der Fahrzeuglängsmitte zugewandte Kante jeder Rollobahn 8 verläuft etwa rechtwinklig zur Leiste 12, während die der A-Säule benachbarte Kante schräg verläuft, und zwar entsprechend dem Neigungswinkel der A-Säule 4.

Die Leiste 12 trägt an ihrem freien überstehenden Ende ein Führungselement 13, das mit einer Führungsbahn 14 zusammenwirkt. Die Führungsbahn 14 kann z.B. eine Stange oder eine z.B. schwalbenschwanzförmig ausgebildete Nut sein.

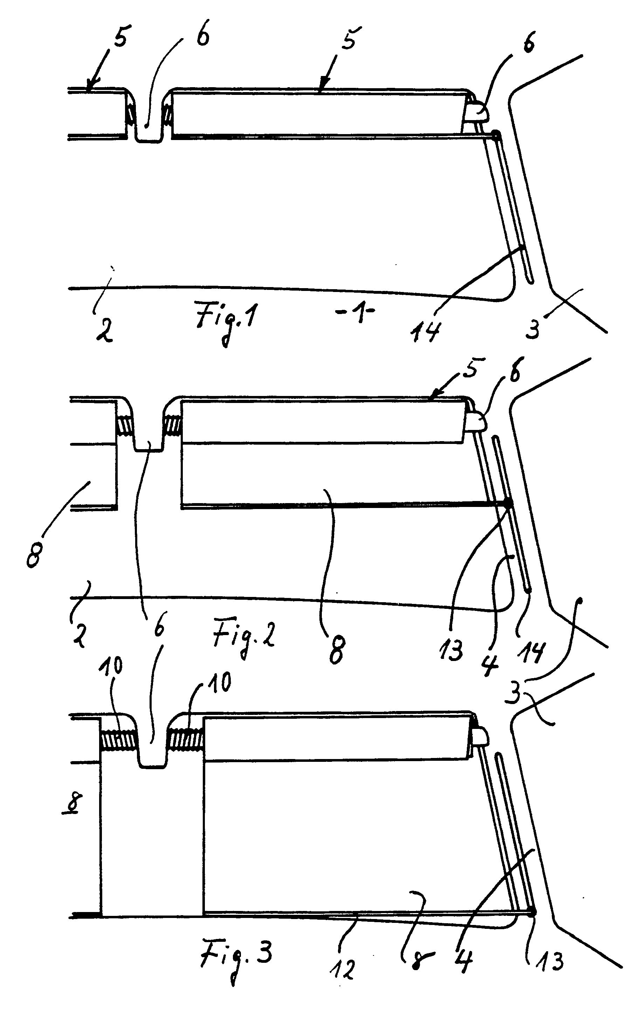

Wird nun, ausgehend von Fig. 1 die Rollobahn 8 von der Wickelwelle 7 abgewickelt, so tritt neben der Drehbewegung der Wickelwelle 7 auch eine axiale Verschiebung derselben ein, mit der Folge, daß die der A-Säule 4 benachbarte Kante der Rollobahn stets parallel zur A-Säule 4 ausgerichtet ist. In Fig. 2 ist etwa der halbe und in Fig. 3 der gesamte Verschiebeweg der Wickelwelle 7 dargestellt. Zwischen der A-Säule 4 und der Rollobahn 8 entsteht somit kein Spalt, durch den blendendes Licht einfallen könnte. Allerdings besteht im mittleren Bereich der Windschutzscheibe 2 ein durch die Rollobahnen 8 nicht abgeschirmter Bereich. Dieser Bereich kann aber im Bedarfsfalle mit einem zusätzlichen Fensterrollo mit rechteckiger Rollobahn abgeschirmt werden.

## Patentansprüche

1. Fensterrollo für Windschutzscheiben (2) von Kraftfahrzeugen, mit zwei im Abstand voneinander an einem Fensterrahmen anordbaren Trägern (6) für eine daran gelagerte Wickelwelle (7), an der die Rollobahn (8) mit einer Kante befestigt ist, dadurch gekennzeichnet, daß die Wickelwelle (7) derart axialverschieblich gelagert ist, daß während des Ab- und Aufwickelns des Fensterrollos zwischen dem schrägen Rand der Rollobahn (8) und der entsprechend schräg verlaufenden A-Säule des PKWs kein unabgeschirmter Spalt, der eine Blendung hervorrufen könnte, verbleibt.

2. Fensterrollo nach Anspruch 1, dadurch gekennzeichnet, daß die Wickelwelle (7) so gelagert ist, daß durch die Drehbewegung beim Auf- und Abwickeln der Rollobahn (8), automatisch eine Axialverschiebung erfolgt.

3. Fensterrollo nach Anspruch 1 oder 2, dadurch gekennzeichnet, daß die Wickelwelle (7) mit zumindest einem der Träger (6) über ein Schraubengewinde axialverschieblich verbunden ist.

4. Fensterrollo nach einem der Ansprüche 1 bis 3, dadurch gekennzeichnet, daß die Wickelwelle (7) an zumindest einem Endbereich ein Innengewinde (9) aufweist und hier von einer feststehenden Gewindespindel (10) des Trägers (6) aufgenommen ist.

5. Fensterrollo nach einem oder mehreren der Ansprüche 1 bis 4, dadurch gekennzeichnet, daß die Wickelwelle (7) eine trapezförmige Rollobahn (8) mit einseitiger Schräge trägt, die daran mit der kürzeren Kante befestigt ist.

6. Fensterrollo nach einem oder mehreren der Ansprüche 1 bis 5, dadurch gekennzeichnet, daß die Wickelwelle (7) eine Rollobahn (8) trägt, an deren freien Kante eine Leiste (12) befestigt ist.

7. Fensterrollo nach Anspruch 6, dadurch gekennzeichnet, daß die parallel zur Wickelwelle (7) ausgerichtete Leiste (12) die Rollobahn (8) einseitig überragt und am freien Endbereich ein mit einer parallel zur schrägen Kante der Rollobahn (8) verlaufenden, am Fensterrahmen angeordneten Führung (14) verbundenes Führungselement (13) trägt.

8. Fensterrollo nach einem oder mehreren der Ansprüche 1 bis 7, dadurch gekennzeichnet, daß die Wickelwelle (7) mit einem automatischen, ggf. elektromotorisch betriebenen Aufwickler ausgerüstet ist.

9. Fensterrollo nach einem oder mehreren der Ansprüche 1 bis 7, dadurch gekennzeichnet, daß die Wickelwelle (7) einen innenliegenden Federaufzug aufweist und daß das Abwickeln der Rollobahn (8) über das, ggf. mit einer elektromechanischen Verschiebeautomatik ausgerüstete Führungselement (14) erfolgt.

## Claims

1. A roller blind for the wind-screen (2) of a motor vehicle, the blind including two supports (6) spacedly securable to a window frame and holding a winder shaft (7) mounted on them, in which one edge of the blind's web (8) is fastened to the shaft, characterized in that the winder shaft (7) is mounted axially displaceably in such a manner that, when the blind is being wound down or wound up, no unscreened gap likely to cause dazzle remains between the oblique edge of the blind's web (8) and the correspondingly obliquely extending A-post of the motor vehicle.

2. A roller blind according to claim 1, characterized in that the shaft (7) is mounted in such a manner that its rotary motion during the upward or downward winding of the blind's web (8) automatically results in its axial displacement.

3. A roller blind according to claim 1 or claim 2, characterized in that the shaft (7) is axially displaceably connected to at least one of the supports (6) by means of a screw thread.

4. A roller blind according to any of the claims 1 to 3, characterized in that the shaft (7) is provided on at least one of its end portions with an internal thread (9) and is held thereby on a stationary threaded spindle (10) of the, or the respective, support (6).

5. A roller blind according to any one or more of the claims 1 to 4, characterised in that the shaft (7) holds the blind's web which is trapezoidal with an oblique edge on one side, and in that the shorter of the web's edges is fastened to the shaft,

6. A roller blind according to any one or more the claims 1 to 5, characterized in that a batten (12) is fastened to the free edge of the blind's web (8) held by the shaft (7).

7. A roller blind according to claim 6, characterized in that the batten (12), which extends parallel with the shaft (7) and protrudes beyond one lateral edge of the web (8), is fitted at its free end portion with a guide element (13) engageable in a slideway (14) securable, parallel with the oblique edge of the web (8), to the window frame.

8. A roller blind according to any one or wore the claims 1 to 7, characterized in that the shaft (7) is provided with an automatically operable winding-up device which, possibly, is arranged to be actuated by an electric motor.

9. A roller blind according to any one or more of the claims 1 to 7, characterized in that the shaft (7) is provided with an internally disposed spring-actuated winding-up device, and in that the web (8) is arranged to be wound down with the aid of the guide element (14) which, possibly, is equipped with an automatically operable electromechanical displacing element.

## Revendications

1. Store pour pare-brise (2) de véhicules à moteur, comportant deux supports (6) pouvant être places à distance l'un de l'autre sur un cadre de vitre et supportant un axe d'enroulement (7) auquel le panneau (8) du store est fixé par un côté, caractérise en ce que l'axe d'enroulement (7) est placé de façon à être déplaçable axialement de telle façon que, pendant le déroulement et l'enroulement du store, il ne reste pas entre le côté oblique du panneau (8) et la colonne A oblique correspondante de la voiture de tourisme de fente non masquée qui pourrait provoquer un éblouissement.

2. Store selon la revendication 1, caractérisé en ce que l'axe d'enroulement (7) est supporté de telle façon que le mouvement de rotation lors de l'enroulement et du déroulement du panneau (8) entraîne automatiquement une translation axiale.

3. Store selon la revendication 1 ou 2, caractérisé en ce que l'axe d'enroulement (7) est relié de façon à être mobile axialement à l'un au moins des supports (6) au moyen d'un filetage.

4. Store selon l'une des revendications 1 à 3, caractérisé en ce que l'axe d'enroulement (7) comporte sur au moins une zone terminale un taraudage (9) coopérant avec une broche filetée fixe (10) du support (6).

5. Store selon une ou plusieurs des revendications 1 à 4, caractérisé en ce que l'axe d'enroulement (7) porte un panneau trapézoïdal (8) à obliquité unilatérale qui y est fixé par un petit côté.

6. Store selon une ou plusieurs des revendications 1 à 5, caractérisé en ce que l'axe d'enroulement (7) porte un panneau (8) au côté libre duquel est fixé un rebord (12).

7. Store selon la revendication 6, caractérisé en ce que le rebord (12) orienté parallèlement à l'axe d'enroulement (7) dépasse d'un côté du panneau (8) et porte dans la zone terminale libre un élément de guidage (3) relié à un guide (14) orienté parallèlement au côté oblique du panneau (8), placé sur le cadre de la vitre.

8. Store selon une ou plusieurs des revendications 1 à 7, caractérisé en ce que l'axe d'enroulement (7) comporte un enrouleur automatique, fonctionnant par exemple avec un moteur électrique.

9. Store selon une ou plusieurs des revendications 1 à 7, caractérisé en ce que l'axe d'enroulement (7) comporte un mécanisme de remontage à ressort intérieur, et en ce que le déroulement du panneau (8) est effectué au moyen de l'élément de guidage (14), éventuellement pourvu d'un mécanisme de déplacement automatique électromécanique.

**Fig.1** -1-

**Fig.2**

**Fig.3**

Fig. 4